# EUROPEAN PATENT APPLICATION

(11) **EP 2 833 306 A1**
(43) Date of publication of application: **04.02.2015**
(21) Application number: 13275247.8
(22) Date of filing: 10.10.2013
(51) Int. Cl.: G06Q 30/00

(54) **Electronic shelf label system and operating method thereof**

(30) Priority: 29.07.2013 KR 20130089518
(71) Applicant: Samsung Electro-Mechanics Co., Ltd, Suwon, Gyunggi-Do (KR)
(72) Inventor: Lee,, Jae Chan, Gyunggi-do (KR); Kim,, Sung Ki, Gyunggi-do (KR); Kang,, Yeon Hee, Gyunggi-do (KR); Lee,, Jong Jin, Gyunggi-do (KR)
(74) Representative: Powell, Timothy John

(57) **Abstract**

There is provided an electronic shelf label system, including an electronic price display outputting product information via a screen so as to be displayed thereon, a wireless terminal scanning a product code of a product and providing the product code to the electronic price display to form a correlation between the product and the electronic price display, and a server providing updated product information corresponding to the product code to the electronic price display, wherein the wireless terminal may provide the product code to the electronic price display using NFC.

## Description

### CROSS-REFERENCE TO RELATED APPLICATION

This application claims the benefit of Korean Patent Application No. 10-2013-0089518 filed on July 29, 2013, with the Korean Intellectual Property Office, the disclosure of which is incorporated herein by reference.

### BACKGROUND OF THE INVENTION

### Field of the Invention

The present invention relates to an electronic shelf label system and an operating method thereof.

### Description of the Related Art

Near field communications (NFC) refers to a non-contact type, near field wireless communications technology, transmitting data between adjacent terminals using a frequency band of 13.56MHz, as a type of radio frequency identification (RFID) tag scheme. NFC technology is widely utilized in payment systems, for the transmission of product information in a supermarket or a general retail store, or travel information for tourists, or in transportation systems, for access control, in locking devices, and the like.

Meanwhile, in order to display and sell a number of products in a predetermined space such as a large retail space, a label displaying product information and prices has been used. In general, the most common form of such product information labels to date employs a scheme in which labels are displayed in the vicinity of the product, in which product information necessary to sell the product, for example, prices and discount information has been handwritten or printed on paper tags so as to conform to a standardized form.

The above-mentioned scheme may look as when it is simple, convenient, and relatively inexpensive, but in a situation in which the standardized forms are used for tens of thousands of product items, such as in the case of a large-scale distribution market, and prices are frequently changed, there is a limit as how an existing paper label scheme can be applied. That is, when the prices of some product items among the tens of thousands of product items have changed, the product items having the changed prices are sorted and the changed product information (e.g., prices and the like) is handwritten or printed. Thereafter, the labels displayed in positions of the corresponding products, displayed for sale in the distribution market should be corrected and replaced.

Whenever the price information of the product is changed, time and effort for the above-mentioned work and replacement are required and improvements of the above-mentioned problems have been increasingly required due to nature of large-scaled distribution markets. That is, the product information should be changed rapidly, accurately, and conveniently only at the lowest price.

In recent times, the existing paper labels have been replaced with electronic tags using an electronic device based on the above-mentioned market requirement. This is due to the fact that the above-mentioned product information displayed on an electronic tag may be rapidly, accurately, and conveniently changed using communications and electronic display technology.

Meanwhile, an electronic shelf label (ESL) system is typically installed at a front edge of a shelf on which the products are displayed, communicates with a server which is a management device to receive the product information related to product names, product prices, and the like from the server, and displays the received product information on the display unit. This electronic price display may simply and accurately display the product names and the product prices of the products displayed according to a control of the server.

In markets to which the above-mentioned electronic shelf label system is applied, in order to update price information for each product in real time, work matching information of the electronic price display itself with the product information has preferentially demanded.

The following related art document relates to an electronic shelf label system, and more particularly, suggests a method of easily changing product information in markets to which the electronic shelf label system is applied using wireless communication and a portable terminal. However, the following related art document does not disclose a correlation between the electronic price display and the product using NFC without using an MAC ID.

### [Related Art Document]

Korean Patent Laid-Open Publication No. 10-2012-0028177

### SUMMARY OF THE INVENTION

An aspect of the present invention provides an electronic shelf label system forming a correlation between products and an electronic price display by near field communications (NFC) using a product code of products without using an MAC ID, and an operating method thereof.

According to an aspect of the present invention, there is provided an electronic shelf label system, including: an electronic price display outputting product information via a screen so as to be displayed thereon; a wireless terminal scanning a product code of a product and providing the product code to the electronic price display to form a correlation between the product and the electronic price display; and a server providing updated product information corresponding to the product code to the electronic price display, wherein the wireless terminal provides the product code to the electronic price display using near field communications (NFC).

The electronic shelf label system may further include at least one gateway receiving the updated product information from the server.

The electronic price display may receive product information relating to the product having the correlation formed therewith from the at least one gateway to thereby update the product information.

The electronic price display may maintain a sleep mode before the wireless terminal provides the product code using NFC.

The server may include a memory unit storing the updated product information provided from the outside.

The server may wirelessly communicate with the electronic price display using WiFi or ZigBee.

According to an aspect of the present invention, there is provided an electronic shelf label system, including: an electronic price display outputting a price of a product having correlation formed therewith by a product code on a screen; a wireless terminal scanning the product code using NFC; and a server receiving a releasing signal from the wireless terminal to release the correlation between the product and the electronic price display and providing releasing information to the electronic price display.

The electronic shelf label system may further include at least one gateway receiving the releasing information from the server and providing the releasing information to the electronic price display having the released correlation.

The electronic price display may be switched to a sleep mode after receiving the releasing information.

According to an aspect of the present invention, there is provided an operating method of an electronic shelf label system, the operating method including: scanning, by a wireless terminal, a product code of a product; providing, by the wireless terminal, the product code to an electronic price display using NFC; forming, by the electronic price display, a correlation with the product by the product code; receiving, by the electronic price display, updated product information corresponding to the product code from a server; and changing, by the electronic price display, existing product information with the updated product information.

The operating method may further include switching the electronic price display into an active mode by receiving the product code from the wireless terminal.

The receiving of the updated product information may include: providing, by the electronic price display, an operation signal to at least one gateway; transmitting, by the at least one gateway, the operation signal to the server; receiving, by the server, the operation signal to thereby check whether or not the updated product information corresponding to the product code exists; when the updated product information exists, providing, by the server, the updated product information to the at least one gateway; and providing, by the at least one gateway, the updated product information to the electronic price display.

According to an aspect of the present invention, there is provided an operating method of an electronic shelf label system, the operating method including: scanning, by a wireless terminal, an electronic price display having correlation formed with a product by a product code using NFC; providing, by the wireless terminal, a releasing signal to a server; releasing, by the server, the correlation between the product and the electronic price display; and providing, by the server, releasing information to the electronic price display.

The operating method may further include switching the electronic price display into a sleep mode after receiving the releasing information.

The providing of the releasing information may include: providing, by the server, the releasing information to at the least one gateway; and providing, by the at least one gateway, the releasing information to the electronic price display.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a view illustrating an example of an application of an electronic shelf label system according to an embodiment of the present invention to a real market;
FIG. 2 is a view illustrating an example of an application of an electronic shelf label system according to an embodiment of the present invention to a real market according to another embodiment of the present invention;
FIG. 3 is a flow chart illustrating a method of forming a correlation with products and changing product information in an electronic price display according to an embodiment of the present invention;
FIG. 4 is a flow chart illustrating a method of forming a correlation with products and changing product information in an electronic price display according to another embodiment of the present invention;
FIG. 5 is a flow chart illustrating a method of releasing the correlation with the products in the electronic price display according to an embodiment of the present invention;
FIG. 6 is a flow chart illustrating an operating method of an electronic shelf label system according to an embodiment of the present invention;
FIG. 7 is a flow chart illustrating a method of updating the product information of the electronic price display shown in FIGS. 3 and 4 of the present invention; and
FIG. 8 is a flow chart illustrating an operating method of the electronic shelf label system shown in FIG. 5 of the present invention.

### DETAILED DESCRIPTION OF THE EMBODIMENTS

Hereinafter, embodiments of the present invention will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions of elements may be exaggerated for clarity, and the same reference numerals will be used throughout to designate the same or like elements.

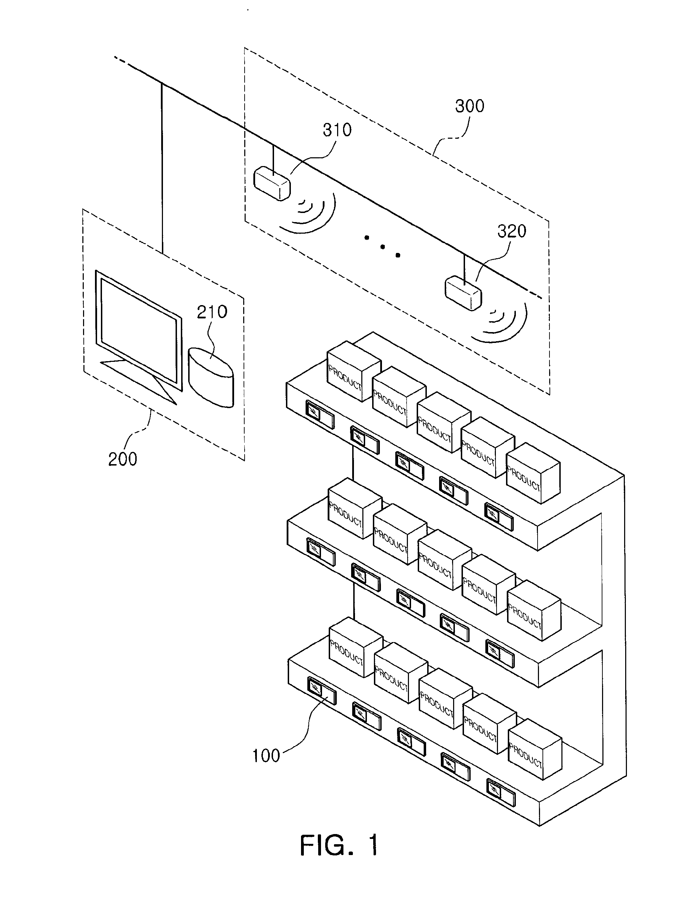

FIG. 1 is a view illustrating an example of an application of an electronic shelf label system according to an embodiment of the present invention to a real market according to an embodiment of the present invention.

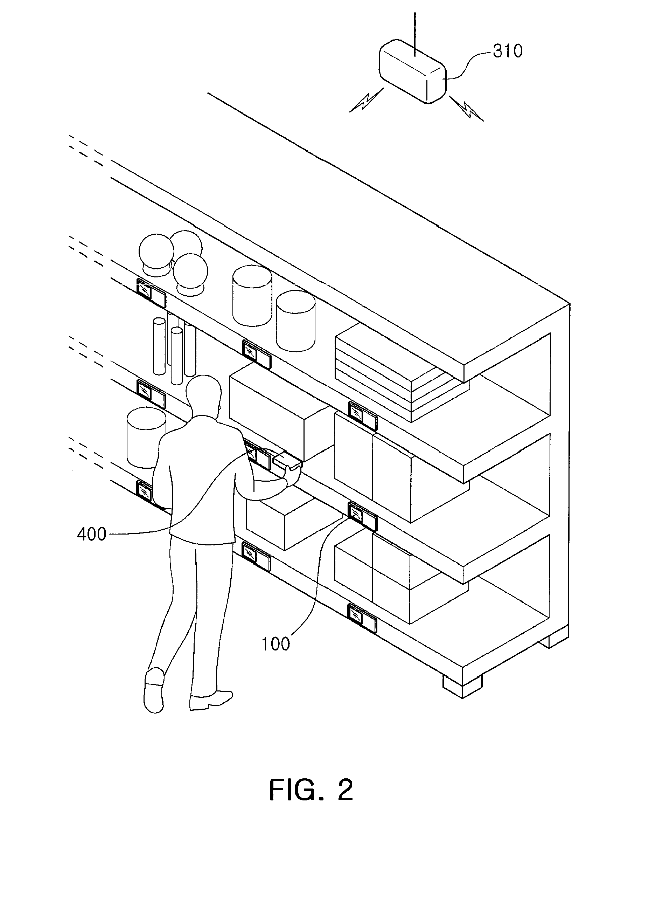

FIG. 2 is a view illustrating an example of an application of an electronic shelf label system according to an embodiment of the present invention to a real market according to another embodiment of the present invention.

Referring to FIGS. 1 and 2, the electronic shelf label system according to the embodiment of the present invention may include an electronic price display 100, a server 200, at least one gateway 300, and a wireless terminal 400.

The electronic price display 100 may output product information via a screen so as to be displayed thereon. Referring to FIGS. 1 and 2, the electronic price display 100 may be mounted in a position, at which a consumer may conveniently view, on a shelf having products displayed thereon and may display information (e.g., product names and prices) of products displayed in the vicinity of the shelf. Meanwhile, the electronic price display 100 may be in a sleep mode prior to receiving product code from the wireless terminal 400.

The wireless terminal 400 may scan the product code of the products and may provide the scanned product code to the electronic price display 100. In this case, the wireless terminal 400 may switch the electronic price display 100 which is in the sleep mode into an active mode by transmitting the product code of the product to the electronic price display 100. In addition, the wireless terminal 400 may form a correlation between the product and the electronic price display 100 by applying the product code of the product to the electronic price display 100.

In this case, as a method applying the product code of the product to the electronic price display 100 by the wireless terminal 400, near field communications (NFC) maybe used. That is, the wireless terminal 400 may apply the product code of the product to the electronic price display 100 just by simple contacting with the electronic price display 100. In addition, the electronic price display 100 in the sleep mode may be switched to the active mode just by the simple contact through NFC of the wireless terminal 400, such that convenience of management may be increased.

Referring to FIG. 2, processes of scanning the product codes of products by a manager using the wireless terminal 400 are shown. In this case, a method of scanning the product code may be performed by a scanner in the wireless terminal 400, as an example.

In more detail, the wireless terminal 400 according to the present embodiment may include the scanner to thereby easily obtain the product codes. That is, the wireless terminal 400 may read the product codes attached to or printed on the products and may store the read result.

The above-mentioned wireless terminal 400 may refer to all terminals capable of implementing various functions using applications including wireless communications while being portable by individual, such as a Personal Mobile Communication Services Terminal, a Personal Digital Assistant (PDA), a smartphone, a tablet PC, a laptop computer, a notebook computer, a wireless LAN terminal, and the like.

This process may not apply the MAC ID to the electronic price display 100 by connecting the electronic price display 100 and the product code itself to each other, and may also prevent poor processing of the electronic price display 100 due to damage to the MAC ID.

Meanwhile, the server 200 may provide updated product information corresponding to the product code to the electronic price display 100. The server 200 may include a memory unit 210 storing the product information and all management information required to operate the system. In addition, the server 200 may further include middleware serving to connect and intermediate between an external device and the memory unit 210.

Therefore, the server 200 may store the updated product information provided from the external device in the memory unit 210.

The at least one gateway 300 may receive the updated product information from the server 200 to again provide the updated product information to the electronic price display 100. In addition, the server 200 and the electronic price display 100 may form a communication channel via the at least one gateway 300.

For example, referring to FIG. 1, the electronic price display 100 may form the communication channel with the server 200 via a first gateway 310, and the server 200 and the first gateway 310, and the server 200 and the electronic price display 100 may be connected to each other by a wireless network such as WiFi or ZigBee communications. However, they may be connected to each other by a wired network, as necessary.

Meanwhile, the server 200 may receive an operation signal from the electronic price display 100 and may then check whether or not the updated product information relating to the product corresponding to the operation signal exists. For example, when the updated product information exists, the server 200 may transmit the updated product information to the electronic price display 100 providing the operation signal. Next, the electronic price display 100 may receive the updated product information to change existing product information and may output the changed product information via the screen so as to be displayed thereon.

In this case, the operation signal may be a signal informing the server 200 that the electronic price display 100 forms the correlation with the product. The operation signal may also include the product code applied to the electronic price display from the wireless terminal 400. Therefore, the server 200 may recognize the product code of the electronic price display 100 included in the operation signal and may update the product information of the electronic price display 100 by providing the updated information of the product corresponding to the product code to the electronic price display 100.

Meanwhile, the electronic price display 100 may provide the operation signal to the at least one gateway 300, for example, the first gateway 310, and the first gateway 310 may provide the operation signal to the server 200. Meanwhile, the server 200 may provide the updated information to the electronic price display 100 via the first gateway 310.

Next, an operating method of an electronic shelf label system according to an embodiment of the present invention will be described.

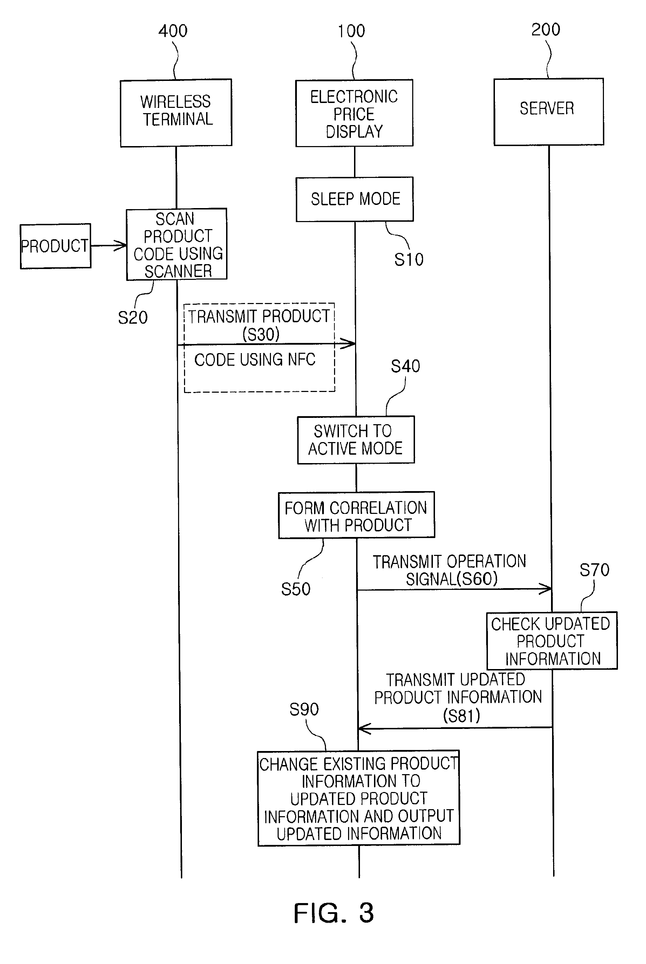

FIG. 3 is a flow chart illustrating a method of forming correlation with products and changing product information in an electronic price display according to an embodiment of the present invention.

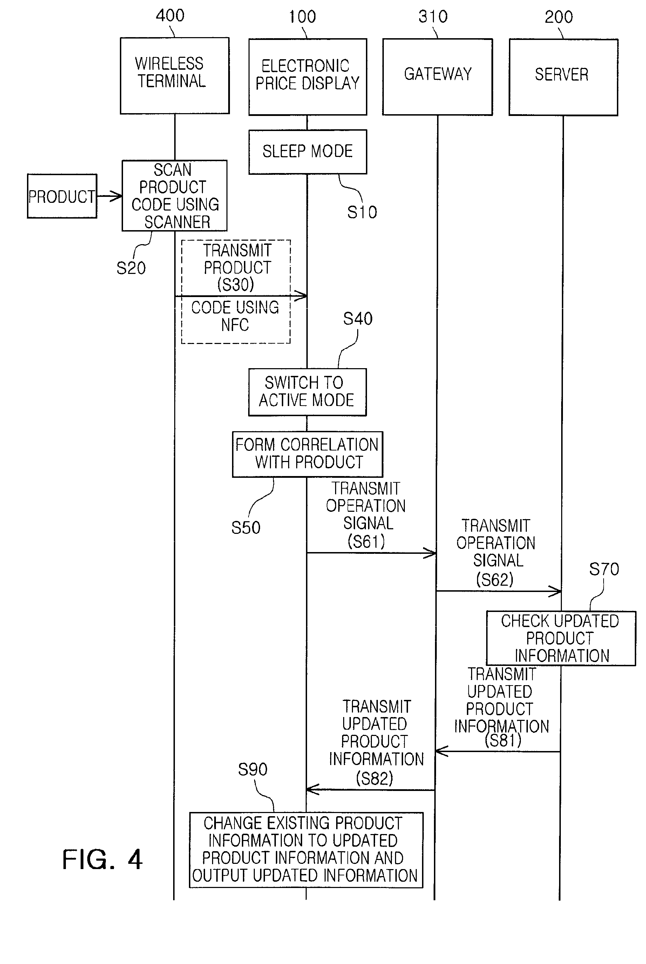

FIG. 4 is a flow chart illustrating a method of forming correlation with products and changing product information in an electronic price display according to another embodiment of the present invention.

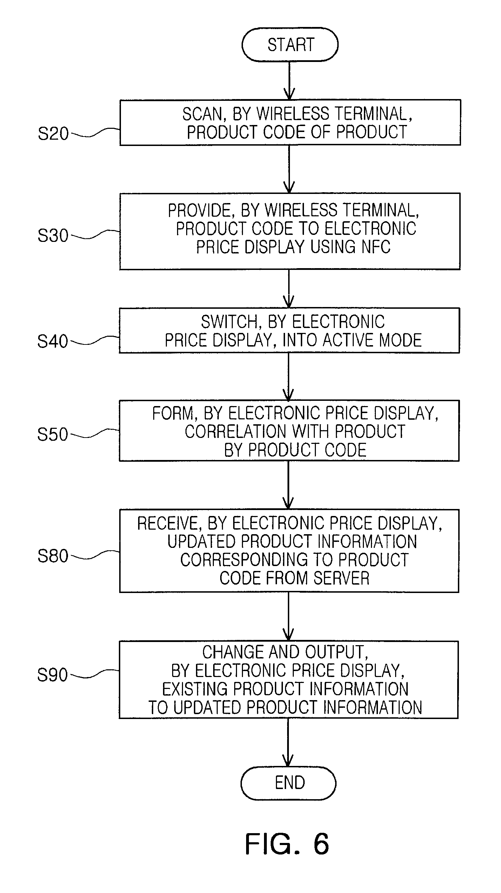

FIG. 6 is a flow chart illustrating an operating method of an electronic shelf label system according to an embodiment of the present invention.

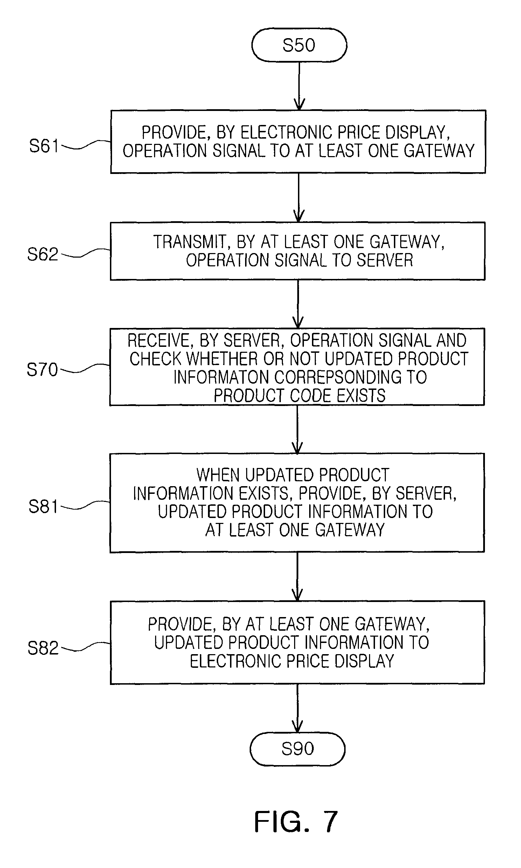

FIG. 7 is a flow chart illustrating a method of updating the product information of the electronic price display shown in FIGS. 3 and 4 according to the embodiment of the present invention.

Referring to FIGS. 3, 4, and 6, the operating method of the electronic shelf label system may include scanning, by a wireless terminal 400, a product code of a product (S20), providing, by the wireless terminal 400, the product code to an electronic price display using NFC (S30), switching the electronic price display 100 which is in a sleep mode (S1) into an active mode (S40), forming correlation between the electronic price display 100 and the product with the product code (S50), receiving, by the electronic price display 100, updated product information corresponding to the product code from a server 200 (S80), and changing and outputting, by the electronic price display, existing product information to the updated product information (S90).

Referring to FIG. 7, in the operating method of the electronic shelf label system, the receiving, by the electronic price display 100, of the updated product information corresponding to the product code from the server 200 (S80) may further include providing, by the electronic price display 100, an operation signal to at least one gateway 300, for example, a first gateway 310 (S61), transmitting, by the first gateway 310, the operation signal to the server 200 (S62), receiving, by the server 200, the operation signal to check whether or not the updated product information corresponding to the product code exists (S70), providing, by the server 200, the updated product information to the first gateway 310 when the updated product information exists (S81), and providing, by the first gateway 310, the updated product information to the electronic price display 100 (S82).

In more detail, the electronic price display 100 may be in the sleep mode state (S10). Meanwhile, the wireless terminal 400 may scan the product code of the product using a scanner. The product code may be product names and prices.

That is, the receiving, by the electronic price display 100, of the updated product information corresponding to the product code from the server 200 (S80) may be performed by allowing a manager of a market to access the scanner of the wireless terminal 400 to the product code of the product displayed (or to be displayed) in a display region in the vicinity of the electronic price display 100 and scanning the product code.

Next, the wireless terminal 400 may transmit the product code to the electronic price display 100 using NFC (S30). In this case, the electronic price display 100 may be switched to the active mode (S40). Thereby, the correlation between the product and the electronic price display 100 may be formed (S50). Thereafter, the electronic price display 100 may transmit the operation signal to the first gateway 310 (S61). The first gateway 310 may receive the operation signal to transmit the operation signal to the server 200 (S62) and the server 200 may read the product code included in the operation signal to check whether or not updated product information for the corresponding product exists in the memory unit 210 (S70).

Thereafter, when the updated product information of the corresponding product exists in the memory unit 210, the server 200 may transmit the updated product information to the first gateway 310 (S81). Next, the first gateway 310 may provide the updated information to the electronic price display 100 (S82) and the electronic price display 100 may change existing product information to the updated information and may output the changed information via a screen so as to be displayed thereon (S90).

Meanwhile, the present embodiment describes a case in which the wireless terminal 400 always communicates with the server 200 for the respective product information and receives the product information from the server 200. However, the present invention is not limited thereto, but may be variously applied. For example, all product information may be stored in the electronic price display in advance or all or a portion of the product information may be obtained by once communication.

Next, an electronic shelf label system releasing correlation between the product and the electronic price display 100 having the correlation formed therein with the product, and an operating method thereof, will be described.

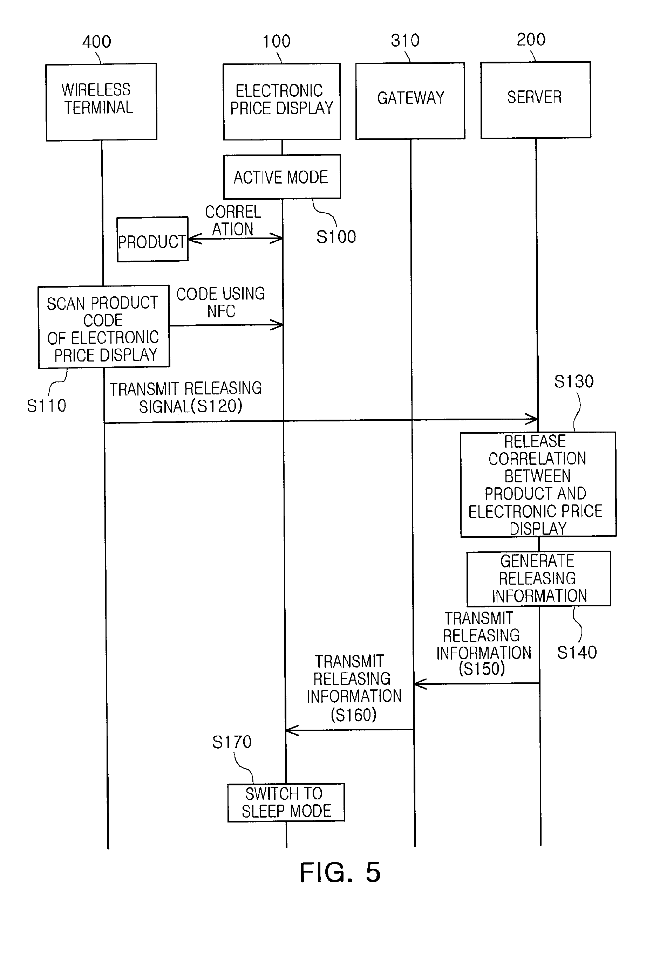

FIG. 5 is a flow chart illustrating a method of releasing the correlation with the products in the electronic price display 100 according to an embodiment of the present invention.

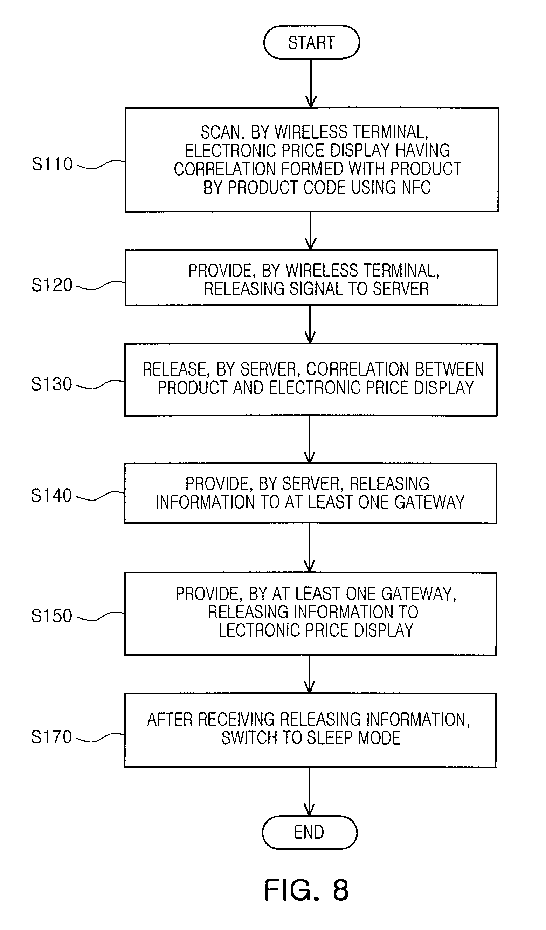

FIG. 8 is a flow chart illustrating an operating method of the electronic shelf label system shown in FIG. 5 according to the embodiment of the present invention.

Referring to FIGS. 5 and 8, the electronic shelf label system according to another embodiment of the present invention may include an electronic price display 100 outputting a price of a product having correlation formed by a product code on a screen, a wireless terminal 400 scanning the product code using NFC, and a server 200 receiving a releasing signal from the wireless terminal to release the correlation between the product and the electronic price display 100. In this case, after releasing the correlation, the server 200 may provide releasing information to the electronic price display 100, and the electronic price display 100 receiving the releasing information may be switched from an active mode to a sleep mode.

Meanwhile, the server 200 may provide the releasing information to a first gateway 310 and the first gateway 310 may provide the releasing information to the electronic price display 100. That is, the server 200 may provide the releasing information to the electronic price display 100 via the first gateway 310.

Therefore, the wireless terminal 400 may relatively, easily release the correlation between the electronic price display 100 and the product by using NFC.

The operating method of the electronic shelf label system according to another embodiment of the present invention may include scanning, by a wireless terminal 400, an electronic price display 100 having correlation formed with a product by product code using NFC (S110), providing, by the wireless terminal 400, a releasing signal to a server 200 (S120), releasing, by the server 200, the correlation between the product and the electronic price display 100 (S130), generating releasing information (S140), transmitting, by the server 200, the releasing information to a first gateway 310 (S150), transmitting, by the first gateway 310, the releasing information to the electronic price display 100 (S160), and switching the electronic price display 100 into a sleep mode (S170).

As set forth above, the electronic shelf label system and the operating method according to embodiments of the present invention may not use the MAC ID by applying the product code itself to the electronic price display, such that poor processing due to ID damage of a specific electronic price display may be prevented. Meanwhile, convenience in applying and releasing the product code may be improved by using NFC.

While the present invention has been shown and described in connection with the embodiments, it will be apparent to those skilled in the art that modifications and variations can be made without departing from the spirit and scope of the invention as defined by the appended claims.

## Claims

1. An electronic shelf label system, comprising:
an electronic price display outputting product information via a screen so as to be displayed thereon;
a wireless terminal scanning a product code of a product and providing the product code to the electronic price display to form a correlation between the product and the electronic price display; and
a server providing updated product information corresponding to the product code to the electronic price display,
wherein the wireless terminal provides the product code to the electronic price display using near field communications (NFC).

2. The electronic shelf label system of claim 1, further comprising at least one gateway receiving the updated product information from the server.

3. The electronic shelf label system of claim 2, wherein the electronic price display receives product information relating to the product having the correlation formed therewith from the at least one gateway to thereby update the product information.

4. The electronic shelf label system of claim 1, wherein the electronic price display maintains a sleep mode prior to the wireless terminal providing the product code using NFC.

5. The electronic shelf label system of claim 1, wherein the server includes a memory unit storing the updated product information provided from the outside.

6. The electronic shelf label system of claim 1, wherein the server wirelessly communicates with the electronic price display using WiFi or ZigBee.

7. An electronic shelf label system, comprising:
an electronic price display outputting a price of a product having a correlation formed therewith by a product code on a screen;
a wireless terminal scanning the product code using NFC; and
a server receiving a releasing signal from the wireless terminal to release the correlation between the product and the electronic price display and providing releasing information to the electronic price display.

8. The electronic shelf label system of claim 7, further comprising at least one gateway receiving the releasing information from the server and providing the releasing information to the electronic price display having the released correlation.

9. The electronic shelf label system of claim 7, wherein the electronic price display is switched to a sleep mode after receiving the releasing information.

10. An operating method of an electronic shelf label system, the operating method comprising:
scanning, by a wireless terminal, a product code of a product;
providing, by the wireless terminal, the product code to an electronic price display using NFC;
forming, by the electronic price display, a correlation with the product by the product code;
receiving, by the electronic price display, updated product information corresponding to the product code from a server; and
changing, by the electronic price display, existing product information with the updated product information.

11. The operating method of clam 10, further comprising switching the electronic price display into an active mode by receiving the product code from the wireless terminal.

12. The operating method of claim 10, wherein the receiving of the updated product information includes:
providing, by the electronic price display, an operation signal to at least one gateway;
transmitting, by the at least one gateway, the operation signal to the server;
receiving, by the server, the operation signal to thereby check whether or not the updated product information corresponding to the product code exists;
when the updated product information exists, providing, by the server, the updated product information to the at least one gateway; and
providing, by the at least one gateway, the updated product information to the electronic price display.

13. An operating method of an electronic shelf label system, the operating method comprising:
scanning, by a wireless terminal, an electronic price display having a correlation formed with a product by a product code using NFC;
providing, by the wireless terminal, a releasing signal to a server;
releasing, by the server, the correlation between the product and the electronic price display; and
providing, by the server, releasing information to the electronic price display.

14. The operating method of claim 13, further comprising switching the electronic price display into a sleep mode after receiving the releasing information.

15. The operating method of claim 13, wherein the providing of the releasing information includes:
providing, by the server, the releasing information to at the least one gateway; and
providing, by the at least one gateway, the releasing information to the electronic price display.
